# EUROPEAN PATENT SPECIFICATION

(11) **EP 2 231 451 B1**
(45) Date of publication and mention of the grant of the patent: **15.02.2012**
(21) Application number: 08856093.3
(22) Date of filing: 08.12.2008
(51) Int. Cl.: B60T 8/32

(54) **BRAKE SYSTEM**
BREMSSYSTEM
SYSTÈME DE FREIN

(30) Priority: 06.12.2007 GB 0723862
(43) Date of publication of application: 29.09.2010
(73) Proprietor: Knorr-Bremse Rail Systems (UK) Limited, Hampton Park East Melksham Wiltshire SN12 6TL (GB)
(72) Inventor: BRADLEY, Ross, Melksham, Wiltshire SN12 6TL (GB); THOMAS, Alan, Melksham, Wiltshire SN12 6TL (GB); HEMMINGS, Mark, Melksham, Wiltshire SN12 6TL (GB)
(74) Representative: Moore, David Simon
(86) International application number: PCT/GB2008/004031
(87) International publication number: WO 2009/071913

(56) References cited:
- DE-A1- 19 537 622
- DE-A1- 19 848 990
- DE-A1- 19 848 995
- DE-C1- 19 702 563
- DE-U1- 20 014 010
- US-A1- 2004 046 442

## Description

The invention relates to a brake system for a railway vehicle incorporating wheel slide protection.

Railway vehicle braking systems are typically air brakes and may be either single pipe or twin pipe systems. Such systems incorporating wheel slide control and wheel spin control have established themselves in recent years. Both wheel slide and wheel spin stem from low wheel to rail adhesion. Wheel slide typically occurs when braking a railway car and wheel spin when the car is accelerating.

A typical wheel slide control system comprises a plurality of sensors on each axle of the vehicle, which sensors are adapted to measure the speed of rotation of the axle. The sensors are individually wired back to a central vehicle brake control unit. In use, the outputs of the sensors are then fed to the brake control unit, which compares the values with those of adjacent axles and if the difference exceeds a pre-determined limit, releases and re-applies the brake pressure until the speed falls within acceptable limits. This system has proven itself in practice and leads to improved braking performance and reduces the probability of damage to wheels and track. The problem of damage to wheels is particularly severe on freight trains, which as a consequence tend to travel more slowly than would otherwise be possible.

Wheel slide protection increases the air consumption of the brake system by generally anything from four times to ten times the air consumption of the same system without wheel slide protection. This leads to problems, in particular with single pipe brake systems, in that the size of auxiliary reservoirs need to be increased by a similar amount to the air consumption. The charge up time of the brake system also increases and the brake release times also increase, in particular after wheel slide protection activity.

A pneumatic railway braking system is known, for example, from the German Patent Document DE 19848990 A1.

The invention seeks to provide a brake system for a railway vehicle having wheel slide protection which reduces the size of the increase in the auxiliary reservoir and with improved charge up times and release times following wheel slide protection activity.

According to the invention there is provided a brake system for a railway vehicle having wheel slide protection comprising a main brake pipe, which brake pipe is fluidly connected to a distributor, an auxiliary reservoir being fluidly connected to the distributor, the distributor, being fluidly connected to one or more brake cylinders, characterised in that a further reservoir is provided, air flow to and from the further reservoir being controllable by a valve, the valve being adapted to supply air to the brakes from the auxiliary reservoir and from the further reservoir.

Preferably, in the event that wheel slide is detected, the selector valve controls the air to the brakes such that only air from the supplementary reservoir is supplied to the brakes. Preferably, when the pressure in the supplementary reservoir reaches a predetermined pressure, the valve switches to permit air to flow from the auxiliary reservoir to the brakes.

Preferably the valve is adapted to control the charging of the supplementary reservoir independently of the charging of the auxiliary reservoir. Preferably, the valve charges the auxiliary reservoir before charging the supplementary reservoir or at a preferential rate.

Preferably, the valve is a selector valve comprising a first port in fluid connection with the supplementary reservoir and an inlet port in connection with the auxiliary reservoir and an outlet port adapted to supply air to brake cylinders, a further valve being adapted to switch air flow from the inlet port in connection with the auxiliary reservoir to the port in connection with the further reservoir. Preferably, the selector valve is provided with an inhibitor valve adapted to isolate the supplementary reservoir from the auxiliary reservoir.

Preferably, in the event that wheel slide is no longer detected, the valve switches airflow from the supplementary reservoir to the auxiliary reservoir. Preferably, after release of the brakes, when the pressure in the auxiliary reservoir reaches a pre-determined limit, the inhibitor valve opens to allow the supplementary reservoir to be recharged. Preferably, if the brake pressure in the auxiliary reservoir drops below a predetermined limit, wheel slide protection is disabled. Preferably, a dump valve is placed between the distributor and a variable load relay valve, which dump valve controls the pilot pressure to the variable load relay valve.

The system of the invention advantageously permits a smaller reservoir capacity to be used, reduces charge up time of the brake system, reduces the brake release times and reduces the total air consumption of the system.

Exemplary embodiments of the invention will now be described in greater detail with reference to the drawings in which:
Fig.1 shows a known arrangement for a railway brake system;
Fig.2 shows an arrangement for a railway brake system according to the invention;
Fig. 3 shows a selector valve for use in the arrangements of figures 2 and 3.
Fig. 4 shows an alternative arrangement to that of Figure 2;
Fig. 5 shows a further alternative arrangement to that of Figure 2
Fig. 6 shows a modification to the system of Figure 5
Fig. 7 shows a further alternative arrangement to that of Figure 2
Fig. 8 shows a modification to the system of Figure 5
Fig. 9 shows a further alternative embodiment

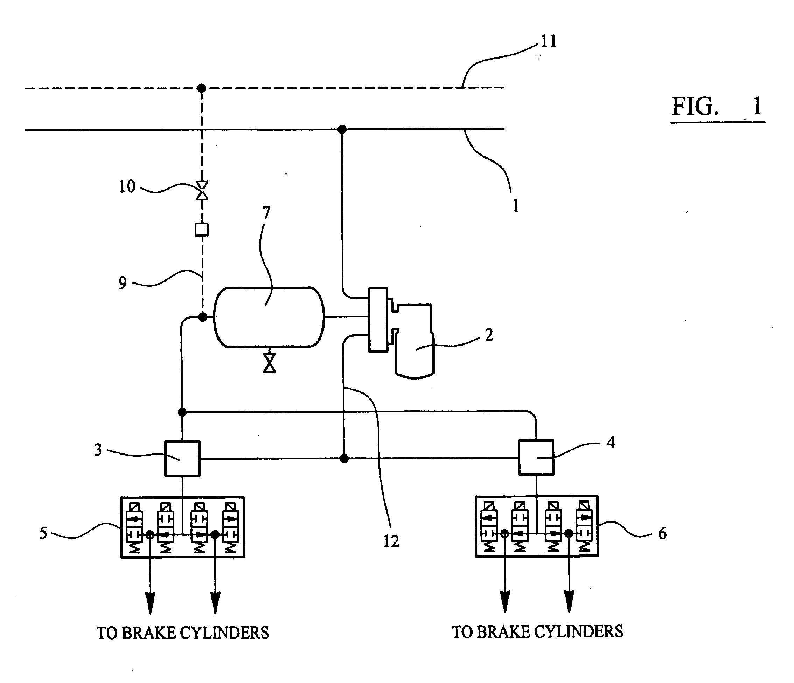

Figure 1 shows a schematic of part of a known arrangement for a railway brake system comprising a main brake pipe 1 which is in fluid communication with a brake distributor 2, which brake distributor 2 is fluidly connected via a conduit 12 to relay valves 3,4, each of which relay valves 3,4 are connected to a respective dump valve 5,6, which dump valves 5,6 are connected to a respective brake cylinder (not known). The brake distributor 2 has a dummy cylinder pressure and will typically have integral relay valve capability. There will generally be one relay and one dump valve per bogie, or one dump valve per axle. It is also known to use variable load valves in place of the relay valves 3,4.

An auxiliary reservoir 7 is provided which stands in fluid communication via a first outlet port with the brake distributor 2 and also in fluid communication via a second outlet port with each of the relay valves 3,4. The auxiliary reservoir pressure is protected by a check valve in the distributor 2. The solid lines show the arrangement in use on a single pipe system. Shown in dashed lines is a further conduit 9 connected to the auxiliary reservoir 7 at the second outlet port, having an isolating cock and check valve 10, which leads to a main reservoir pipe 11. The conduit 9, check valve 10 and main reservoir 11 would be present in a twin pipe system. In use, the auxiliary reservoir 7 stores the energy, in the form of compressed air, used to apply the brakes. The auxiliary reservoir 7 is charged using the air supply in the brake pipe 1.

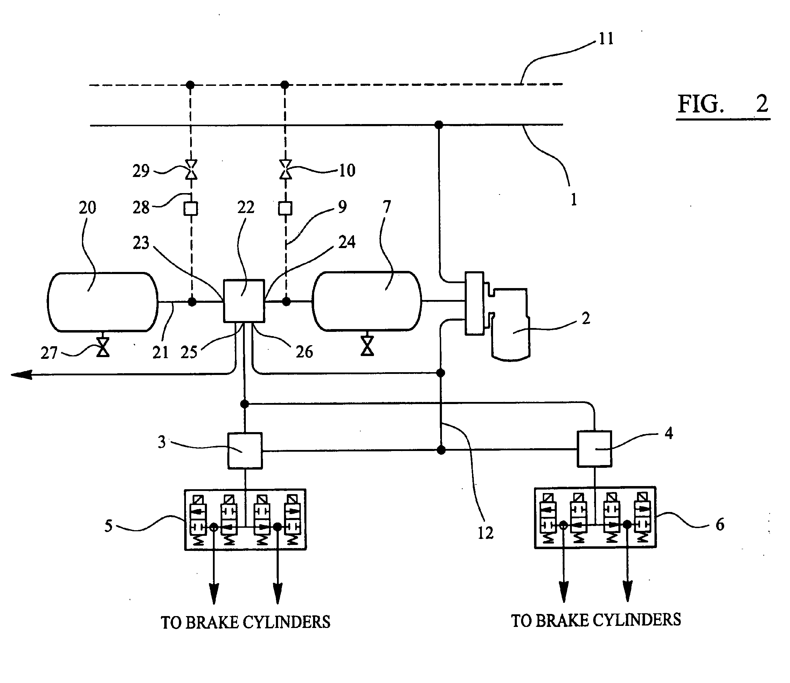

Figure 2 shows a first embodiment of the invention in which like numbers describe like parts. In this embodiment, a wheel slide protection (WSP) or supplementary reservoir 20 is provided which is connected via a conduit 21 to a first port 23 of an air supply or selector valve 22. The supplementary reservoir effectively increases the capacity of the auxiliary reservoir to provide sufficient air capacity for wheel slide protection. The selector valve also stands in fluid communication via a second port 24 with the conduit 9 and the second outlet of the auxiliary reservoir 7. A third port 25 of the selector valve 22 is in fluid communication with the relay valves 3,4 and a fourth port 26 of the selector valve 22 is in fluid communication with the conduit 12 between the brake distributor 2 and the relay valves 3,4. The selector valve 22 is electronically controlled by a WSP brake control unit (not shown). The WSP reservoir 20 is provided with an emergency exhaust valve 27. The valve 22 manages the air supply in the brake system by providing a priority air supply into the reservoir capacity until the brakes are in a state of near release, at which point the train can pull away within an acceptable period of time. Once the auxiliary reservoir 7 has been charged to the required level, the valve 22 changes state and directs air to the supplementary reservoir 20.

Pressure in the dummy cylinder or brake cylinder lines can be used as a signal for the changeover of air supply recharge from one reservoir to another. The valve 22 further comprises an integral check valve to prevent loss of air from the auxiliary reservoir to the supplementary reservoir 20. The valve 22 can be operated either pneumatically or electrically.

If the auxiliary reservoir pressure is seen to drop to the minimum safety requirement threshold level, during WSP activity, the WSP function will be disabled in both dump valves. This state will remain until the AR and SR pressures have been reinstated to a pre-determined level capable of supporting WSP activity.

In the event that the embodiment is used with a twin pipe system, a further conduit 28 with an isolating cock and check valve 29 enables fluid communication between the main reservoir pipe 11 and the conduit 21 between the WSP reservoir 20 and the selector valve 22. In the two pipe arrangement the first pipe transmits the brake demand and the second optional pipe delivers the air supply.

In a particularly preferred embodiment, the auxiliary reservoir and the supplementary reservoir are depleted simultaneously. Alternatively, the valve could also switch to the supplementary reservoir for wheel slide protection and back to the auxiliary reservoir for emergency braking such as by running the supplementary reservoir pressure down below the emergency brake lower limit pressure. After application of the brakes, the selector valve provides for the auxiliary reservoir to be charged before the supplementary reservoir by isolating the supplementary reservoir from the air supply, thereby enabling the train to pull away in an acceptable time. The valve can then switch state to charge the supplementary reservoir.

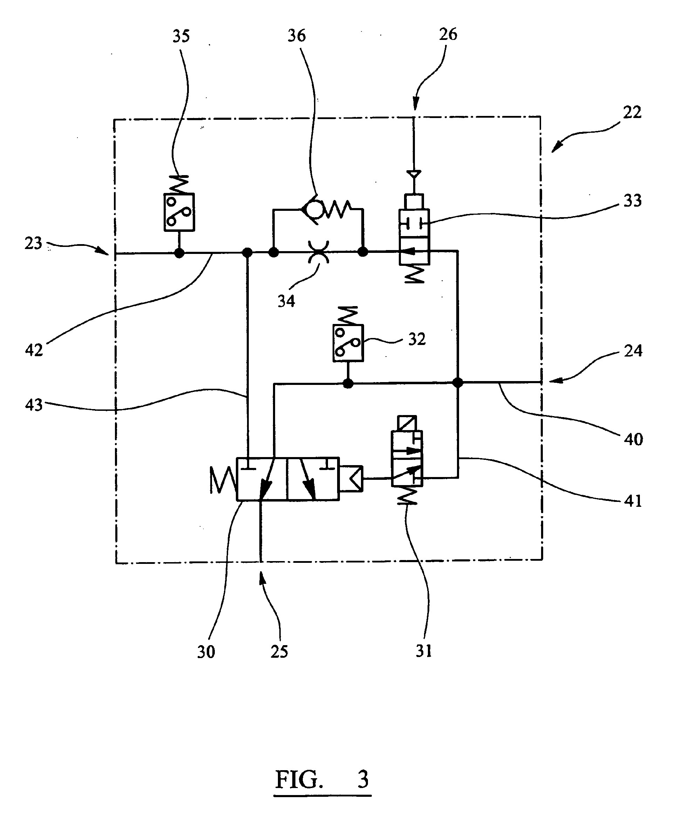

Fig.3 shows an internal arrangement for the selector valve 22 having first 23, second 24, third 25 and fourth ports 26. The second port 24 is connected via a conduit 40 to the third port 25 with the air flow being controllable via a 2/2 change over valve 30 in the conduit 40. The second inlet of the change-over valve 30 is connected to the first port 23 via conduit 43 and the second outlet of the change-over valve 30 is connected to a solenoid valve 31, the output of which valve 31 is in fluid communication with the conduit 40 via a further conduit 41. A low pressure switch 32 is located in the conduit 40 between the second port 24 and the first inlet of the change-over valve 30. The conduit 41 is further connected to an inhibitor valve 33, which in an open position is in fluid communication with a choke 34 and in a closed position with the fourth port 26. The output of the choke 34 is fluidly connected with the first port 23 via a conduit 42, a low WSP pressure switch 35 being provided in the conduit 42 for controlling air flow to and from the first port 23. A check valve 36 is provided to bypass the choke 34 when air flows from the first port 23 to the fourth port 26.

In use, air passes from the main brake pipe 1 through the brake distributor 2 and the auxiliary reservoir 7 and enters the selector valve 22 via the second port 24. Air passes through the inhibitor valve 33 in the open position and the choke 34 to the first port 23 to charge the WSP reservoir 20.

To apply the brakes, the brake distributor dummy cylinder pressure initiates a brake application on the relay valve (or variable load valve) control chamber. Air flows rapidly through the selector valve 22 from the second port 24 connected to the auxiliary reservoir 7 to the third port 25 to allow the brake cylinders to fill through the relay valves 3,4. The dummy cylinder pressure at the fourth port 26 closes the inhibitor valve 33 thereby isolating the WSP reservoir 20 from the auxiliary reservoir 7.

In the event that WSP sensors detect wheel slide during brake application, the WSP brake control unit energises the solenoid valve 31, which passes the auxiliary reservoir pressure 7 to the change-over valve piston to connect the first port 23 and the WSP reservoir 20 to the third port 25, isolating the auxiliary reservoir 7 from the brake cylinders.

When the WSP sensors detect that wheel slide is no longer present, the WSP brake control unit de-energises the solenoid valve 31, which vents the auxiliary reservoir pressure from the change-over valve piston to connect the second port 24 back to the third port 25.

The WSP control unit is adapted such that it can only energise the solenoid valve 31 when both the low WSP pressure switch 35 and the low auxiliary reservoir switch 32 are in the open position.

The low WSP pressure switch 35 is set to a level below full service braking pressure to utilise the stored energy in the WSP reservoir 20. Once the WSP reservoir is depleted to this level the WSP control unit de-energises the solenoid valve 31 and inhibits WSP control.

The low auxiliary reservoir switch 32 is set at a level to ensure that a full service braking application is available from the auxiliary reservoir. Once the auxiliary reservoir is depleted to this level, WSP control is again inhibited.

The WSP control unit can control the selector valve to switch between the auxiliary reservoir 7 and the WSP reservoir 20 as required until WSP inhibit thresholds are reached.

During release of the brakes, the auxiliary reservoir 7 is re-charged with air from the main pipe 1 and the re-charging is proportional to the ratio of the brake cylinder pressure to the dummy cylinder pressure until this ratio falls to 0.2 bar at which point the inhibitor valve 33 re-opens thereby allowing air to re-fill the WSP reservoir 20 through the choke 34. This permits the brake release to be achieved without having to charge the WSP reservoir 20, thereby reducing the time that the train is stopped on the rail system.

The brake distributor 2 vents the auxiliary reservoir 7 and the brake cylinders in the known manner. Venting of the WSP reservoir is automatically achieved during blow down when the pressure at the fourth port 26 reduces to allow the inhibitor valve 33 to open and allow air to pass back through the distributor 2 via the auxiliary reservoir 7. During reverse flow through the selector valve 22 from the WSP reservoir 20 to the distributor 2, the check valve 36 bypasses the choke 34 which reduce the discharge time.

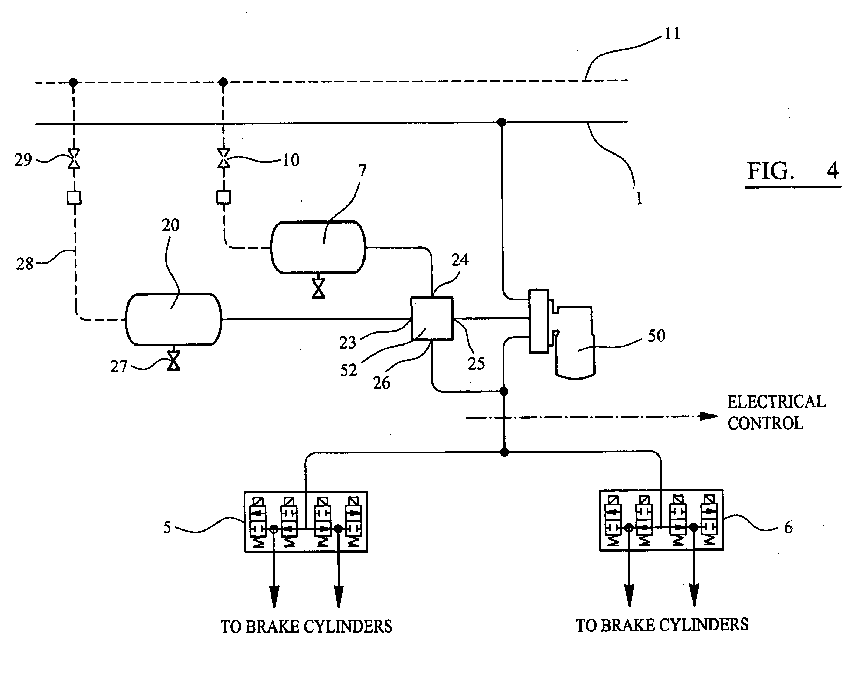

Figure 4 shows an alternative arrangement to that in Figure 2 and again like numbers are used in respect of like components. The brake system comprises a main brake pipe 1 in fluid communication with a brake distributor 50, which brake distributor 50 comprises an integrated relay valve. The brake distributor 50 is connected to port 25 of the selector valve 52. A second port 24 of a selector valve 52 is connected to the auxiliary reservoir 7. The operation of the selector valve 52 is controlled by a WSP brake control unit. The WSP reservoir 20 is connected to the first port 23 of the selector valve 52. A fourth port 26 is in fluid connection with the connection between the brake distributor 50 and the dump valves 5,6 which in turn are connected to respective brake cylinders.

As with figures 1 and 2, the additional parts for an arrangement for a twin pipe system is shown in dashed lines comprising a further conduit 9 with an isolating cock and check valve 10 connects the auxiliary reservoir 7 with the main reservoir pipe 11 and a conduit 28 with an isolating cock and check valve 29 connects the WSP reservoir 20 to the main reservoir pipe 11.

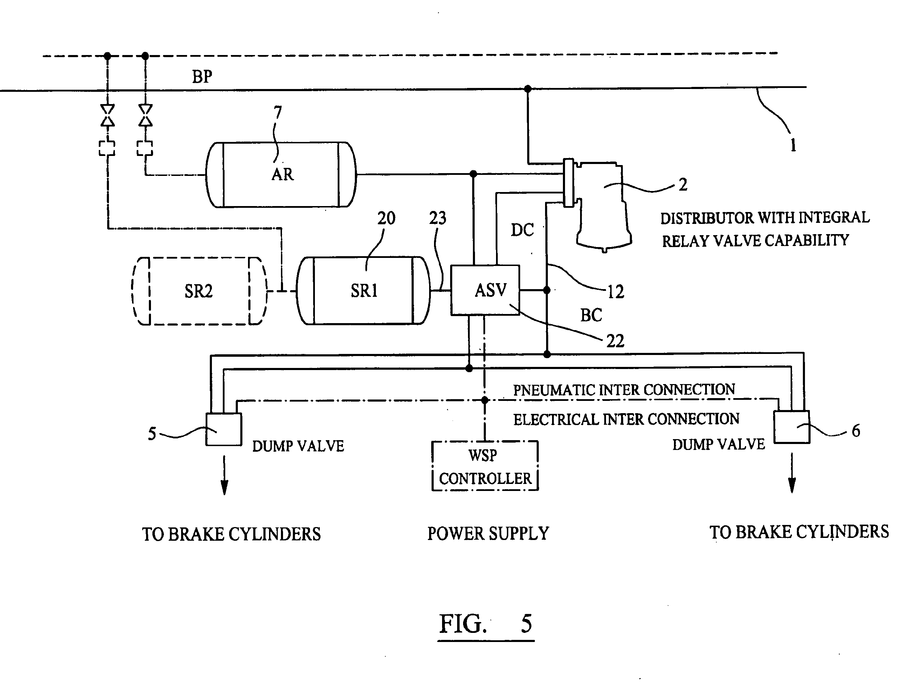

Figure 5 shows a further alternative arrangement to that of Figure 2. In this embodiment, the auxiliary reservoir 7 stands in fluid communication with the brake distributor 2, which draws its air from the main brake pipe 1 and which distributor 2 is fluidly connected via conduit 12 to the anti-lock dump valves 5,6. The WSP reservoir 20 is connected via conduit 23 to a control valve 22. The control valve 22 controls the air management of the system so that the air supply into the auxiliary reservoir 7 is given priority over the air into the WSP reservoir 20 until the brakes are in a state of near release. The control valve 22 then re-directs air supply into the WSP reservoir. The pressure in the dummy cylinder or brake cylinder lines are two further options for generating the signal for the control valve to switch air supply from one reservoir to the other. This is shown in dashed lines.

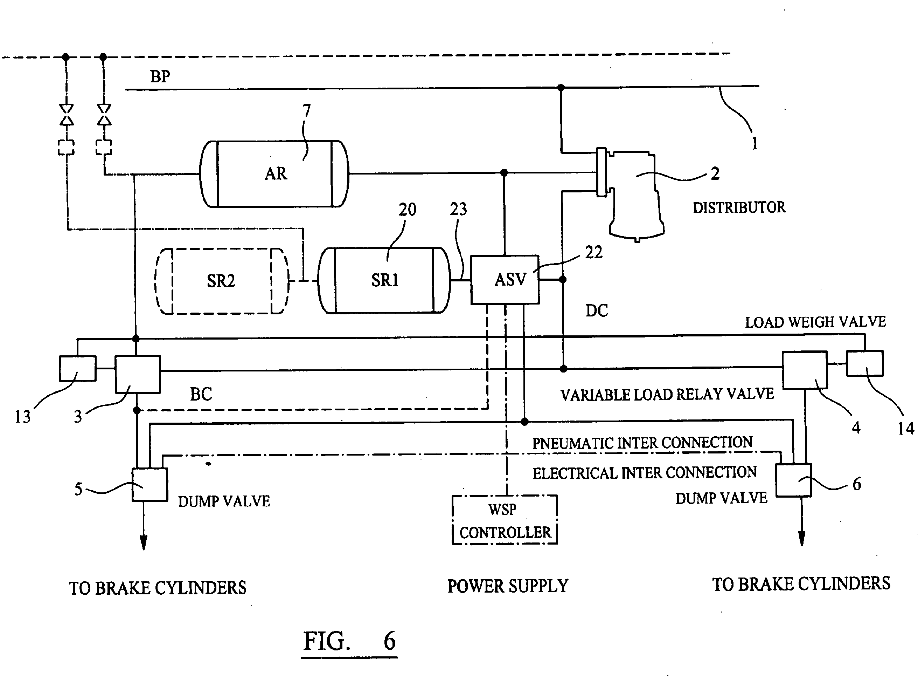

Figure 6 shows a further embodiment, similar to the embodiment of Figure 5, in which the system further includes load weigh valves 13, 14 and relay valves 5,6.

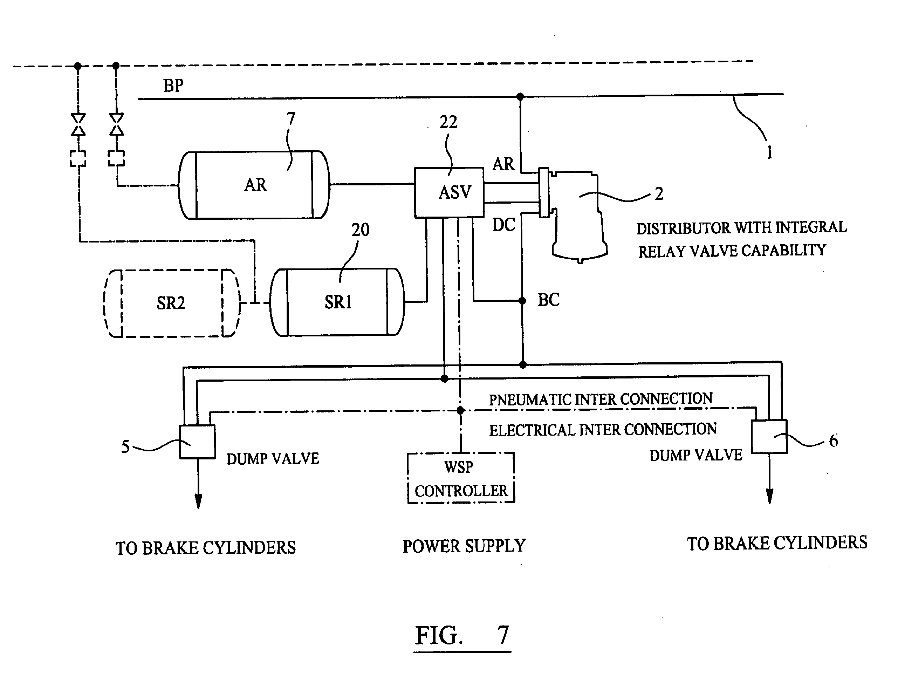

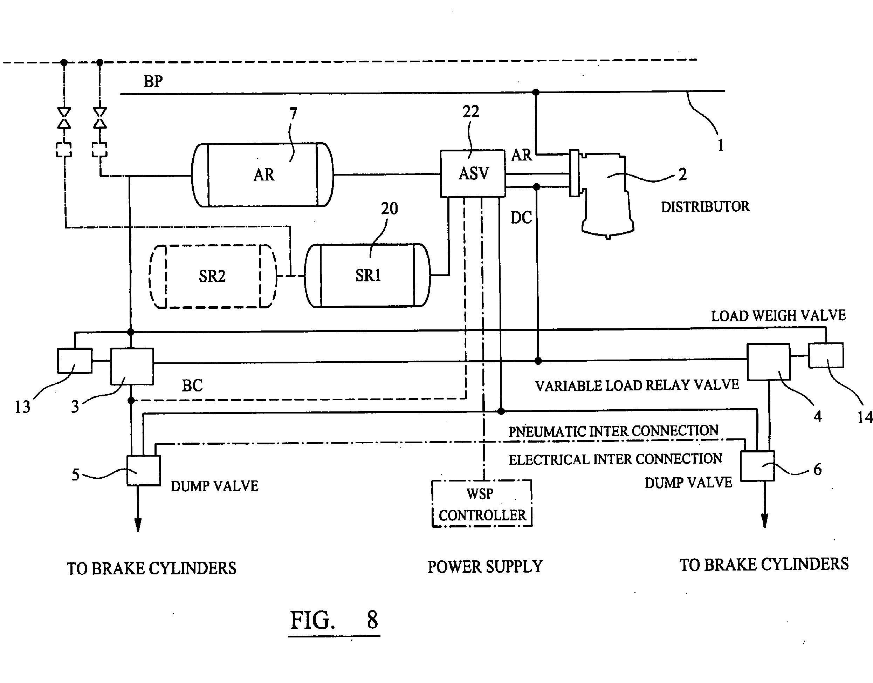

Figures 7 and 8 show an alternative embodiment to Figures 5 and 6, in which the selector valve is located between the auxiliary reservoir and the distributor.

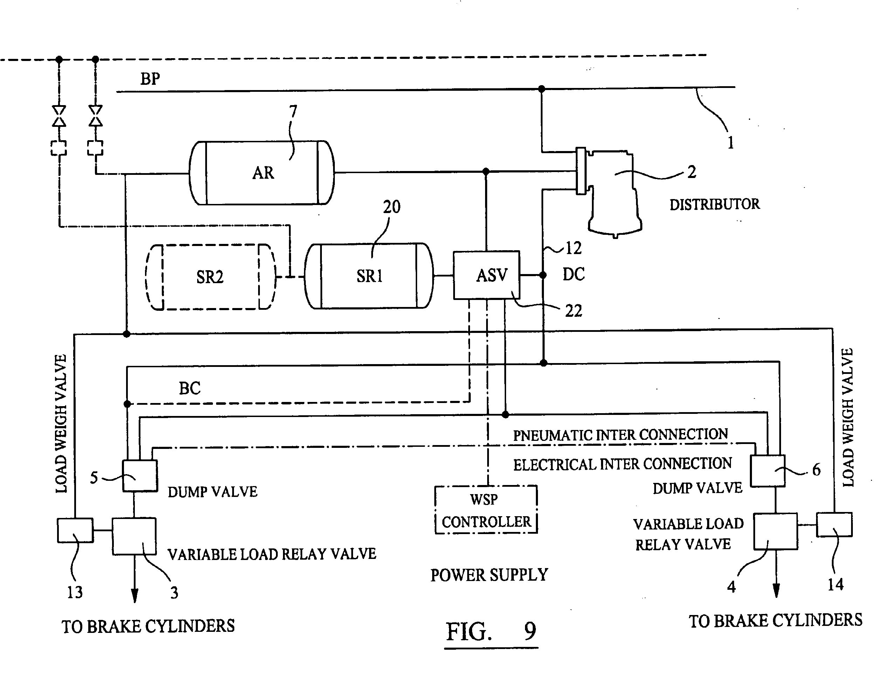

Figure 9 shows a further alternative embodiment, in which the dump valves are positioned on the input to the variable load relay valves. In this arrangement, the dump valve controls the pilot pressure to the variable load relay valve.

The embodiments of figures 4 to 9 can also optionally be used with a twin pipe system as described above and shown in dotted lines. The air supply pipe is typically fitted with a check valve and isolation cock between it and the auxiliary reservoir and supplementary reservoirs.

The system described advantageously ensures that a full service braking application from the auxiliary reservoir is available, in the event of low WSP pressure. The system also advantageously inhibits the charging of the WSP reservoir during application and release of the brakes.

Although the system has been specifically described as having a WSP reservoir, it would be possible to have a plurality of interconnected WSP or supplementary reservoirs. Operation of the control valve can be achieved by pneumatic control only or electrically. Wheel slide protection (WSP) in this application also includes wheel flat protection (WFP). Typically, the system can operate on a per car, per bogie or per axle basis, in which case the system has one dump valve per car, one per bogie or per axle, respectively.

## Claims

1. A brake system for a railway vehicle having wheel slide protection comprising a main brake pipe (1), which brake pipe is fluidly connected to a distributor (2), an auxiliary reservoir (7) being fluidly connected to the distributor (2), the distributor (2) being fluidly connected to one or more brake cylinders,
**characterised in that** a further reservoir (20) is provided, air flow to and from the supplementary reservoir (20) being controllable by a selector valve (22), the valve being adapted to supply air to the brakes from the auxiliary reservoir (7) and from the supplementary reservoir (20).

2. A brake system according to Claim 1, wherein in the event that wheel slide is detected, the selector valve (22) controls the air to the brakes such that only air from the supplementary reservoir (20) is supplied to the brakes.

3. A brake system according to Claim 2, wherein when the pressure in the supplementary reservoir reaches a predetermined pressure, the selector valve switches to permit air to flow from the auxiliary reservoir to the brakes.

4. A brake system according to any one of Claims 1 to 3,. wherein the selector valve (22) is adapted to control the charging of the supplementary reservoir independently of the charging of the auxiliary reservoir

5. A brake system according to Claim 4, wherein the valve charges the auxiliary reservoir before charging the supplementary reservoir or charges the auxiliary reservoir at a preferential rate.

6. A brake system according to any one of Claims 1 to 5, wherein the selector valve is provided with an inhibitor valve (33) adapted to isolate the supplementary reservoir from the auxiliary reservoir.

7. A brake system according to any one of Claims 1 to 6, wherein in the event that wheel slide is no longer detected, the selector valve switches airflow from the supplementary reservoir to the auxiliary reservoir.

8. A brake system according to claim 6, wherein after release of the brakes, when the pressure in the auxiliary reservoir reaches a pre-determined limit, the inhibitor valve (33) opens to allow the supplementary reservoir to be recharged.

9. A brake system according to any one of Claims 1 to 8, wherein if the brake pressure in the auxiliary reservoir drops below a predetermined limit, wheel slide protection is disabled.

10. A brake system according to any one of Claims 1 to 9, wherein a dump valve is placed between the distributor and a variable load relay valve, which dump valve controls the pilot pressure to the variable load relay valve.

## Patentansprüche

1. Bremsanlage für ein Eisenbahnfahrzeug mit Blockierschutz, umfassend eine Hauptbremsleitung (1) in Fluidverbindung mit einem Verteiler (2) und einen Zusatzbehälter (7) in Fluidverbindung mit dem Verteiler (2), wobei der Verteiler (2) in Fluidverbindung mit einem Bremszylinder oder mehreren Bremszylindern steht, **dadurch gekennzeichnet, dass** ein weiterer Behälter (20) vorgesehen ist, wobei der Luftstrom zum und vom Ergänzungsbehälter (20) durch ein Wählventil (22) regelbar ist, das zur Versorgung der Bremsen aus dem Zusatzbehälter (7) und aus dem Ergänzungsbehälter (20) ausgelegt ist.

2. Bremsanlage nach Anspruch 1, wobei im Fall der Feststellung einer Blockierung das Wählventil (22) die Luftzufuhr zu den Bremsen so regelt, dass nur Luft aus dem Ergänzungsbehälter (20) zu den Bremsen strömt.

3. Bremsanlage nach Anspruch 2, wobei, wenn der Druck im Ergänzungsbehälter einen Vorgabewert erreicht, das Wählventil umschaltet und Luft aus dem Zusatzbehälter zu den Bremsen strömen lässt.

4. Bremsanlage nach einem der Ansprüche 1 bis 3, wobei das Wählventil (22) zur Regelung der Aufladung des Ergänzungsbehälters unabhängig von der Aufladung des Zusatzbehälters ausgelegt ist.

5. Bremsanlage nach Anspruch 4, wobei das Ventil den Zusatzbehälter vor dem Ergänzungsbehälter oder mit einer Vorzugsgeschwindigkeit aufladet.

6. Bremsanlage nach einem der Ansprüche 1 bis 5, wobei das Wählventil mit einem Hemmventil (33) versehen ist, das den Ergänzungsbehälter vom Zusatzbehälter trennt.

7. Bremsanlage nach einem der Ansprüche 1 bis 6, wobei im Fall, dass keine Blockierung mehr festgestellt wird, das Wählventil den Luftstrom vom Ergänzungsbehälter zum Zusatzbehälter umschaltet.

8. Bremsanlage nach Anspruch 6, wobei nach dem Lösen der Bremsen, wenn der Druck im Zusatzbehälter einen vorgegebenen Grenzwert erreicht, das Hemmventil (33) sich öffnet, um das Wiederaufladen des Ergänzungsbehälters zu ermöglichen.

9. Bremsanlage nach einem der Ansprüche 1 bis 8, wobei, wenn der Bremsdruck im Zusatzbehälter einen vorgegebenen Grenzwert unterschreitet, der Blockierschutz deaktiviert wird.

10. Bremsanlage nach einem der Ansprüche 1 bis 9, wobei zwischen dem Verteiler und einem Relaisventil mit variabler Last ein Ablassventil vorgesehen ist, das den das Relaisventilmit variabler Last beaufschlagenden Vorsteuerdruck regelt.

## Revendications

1. Système de frein pour un véhicule ferroviaire doté d'une protection contre le patinage des roues, ledit système de frein comprenant une conduite de frein principale (1) reliée de façon fluide à un distributeur (2), un réservoir (7) auxiliaire relié de façon fluide au distributeur (2), ledit distributeur (2) étant relié de façon fluide à un ou plusieurs cylindres de frein, **caractérisé en ce qu'**un autre réservoir (20) est prévu, l'écoulement d'air vers et à partir du réservoir supplémentaire (20) pouvant être commandé par une vanne sélectrice (22), la vanne étant conçue pour alimenter les freins en air provenant du réservoir auxiliaire (7) et du réservoir supplémentaire (20).

2. Système de frein selon la revendication 1, dans lequel dans le cas où un patinage des roues est détecté, la vanne sélectrice (22) commande l'alimentation en air vers les freins de sorte que seul l'air provenant du réservoir supplémentaire (20) soit fourni aux freins.

3. Système de freinage selon la revendication 2, dans lequel la pression dans le réservoir supplémentaire atteint une pression prédéfinie, la vanne sélectrice commute afin de permettre à l'air de s'écouler à partir du réservoir auxiliaire vers les freins.

4. Système de frein selon l'une quelconque des revendications de 1 à 3, dans lequel la vanne sélectrice (22) est conçue pour commander le chargement du réservoir supplémentaire indépendamment du chargement du réservoir auxiliaire.

5. Système de frein selon la revendication 4, dans lequel la vanne charge le réservoir auxiliaire avant de charger le réservoir supplémentaire ou charge le réservoir auxiliaire à un débit préférentiel.

6. Système de frein selon l'une quelconque des revendications de 1 à 5, dans lequel la vanne sélectrice est dotée d'une vanne inhibiteur (33) conçue pour isoler le réservoir supplémentaire du réservoir auxiliaire.

7. Système de frein selon l'une quelconque des revendications de 1 à 6, dans lequel dans le cas où un patinage des roues n'est plus détecté, la vanne sélectrice commute l'écoulement d'air à partir du réservoir supplémentaire vers le réservoir auxiliaire.

8. Système de frein selon la revendication 6, dans lequel après le relâchement des freins, lorsque la pression dans le réservoir auxiliaire atteint une limite prédéfinie, la vanne inhibiteur (33) s'ouvre pour permettre au réservoir supplémentaire d'être rechargé.

9. Système de frein selon l'une quelconque des revendications de 1 à 8, dans lequel si la pression de frein dans le réservoir auxiliaire chute en dessous de la limite prédéfinie, la protection contre le patinage des roues est désactivée.

10. Système de frein selon l'une quelconque des revendications de 1 à 9, dans lequel la soupape de décharge est disposée entre le distributeur et la valve-relais à charge variable, ladite soupape de décharge commande la pression de pilotage vers la valve-relais à charge variable.
